(19) Europäisches Patentamt
European Patent Office
Office européen des brevets

(11) **EP 0 644 350 B1**

(12) **EUROPÄISCHE PATENTSCHRIFT**

(45) Veröffentlichungstag und Bekanntmachung des Hinweises auf die Patenterteilung:
**21.01.1998   Patentblatt 1998/04**

(51) Int Cl.$^6$: **F16F 7/08**, B60J 10/00, B60J 10/04, B60S 1/04, B60R 13/06, E06B 7/23

(21) Anmeldenummer: **94113584.0**

(22) Anmeldetag: **31.08.1994**

(54) **Einrichtung zur Vermeidung von selbsterregten Reibschwingungen**

Device to avoid self-substained frictional oscillations

Dispositif pour empêcher oscillation de friction auto-excité

(84) Benannte Vertragsstaaten:
**DE ES FR GB IT NL SE**

(30) Priorität: **18.09.1993   DE 4331790**

(43) Veröffentlichungstag der Anmeldung:
**22.03.1995   Patentblatt 1995/12**

(73) Patentinhaber: **DAIMLER-BENZ AKTIENGESELLSCHAFT**
**70567 Stuttgart (DE)**

(72) Erfinder:
• **Bschorr, Oskar, Dr.**
  **D-81679 München (DE)**
• **Abendschein, Martin**
  **D-82008 Unterhaching (DE)**

(56) Entgegenhaltungen:
**EP-A- 0 343 046          EP-A- 0 443 345**

• **P.M. MORSE et al. "Theorectical Acoustics", 1968, MC GRAW-HILL, Seiten 841ff * Seite 842, 2. Absatz; Fig. 14.4 ***

**Beschreibung**

Die Erfindung betrifft Einrichtung zur Vermeidung von Quietschgeräuschen durch eine Dichtung an einer Fensterscheibe, insbesondere einer Pkw-Seitenscheibe, welche quer zu der an der Scheibe anliegenden Dichtung verschiebbar ist.

Selbsterregende Reibschwingungen, die auch als "slip-stick-Effekt" bekannt sind, verursachen beim Ein- und Ausfahren von Pkw-Seitenscheiben, die durch mit relativ hohen Kräften anliegenden Dichtungen gegenüber der Karosserie abgedichtet sind, Quietschgeräusche. Im allgemeinen versucht man, derartige slip-stick-Effekte durch Optimierung von Systemparametern wie Masse, Steifigkeit und Geometrie zu vermeiden. In Folge komplexer Reibungs- und Dämpfungsmechanismen sind dazu aufwendige theoretische und experimentelle Untersuchungen notwendig, die jedoch einen Erfolg nicht zwingend garantieren. Insbesondere haben experimentelle Untersuchungen gezeigt, daß ruckfreie Bewegungen nur bei geringen Flächenpressungen möglich sind. Geringe Flächenpressungen sind aber aus den oben genannten Gründen zu vermeiden.

Ein ingenieurmäßig besonders schwer zu lösendes Problem ist die Vermeidung von Quietschgeräuschen, die durch Gleiten von glatten Flächen wie Fensterscheiben an elastischen Materialien, wie Dichtungen entstehen. Besonders lästig sind derartige Quietschgeräusche bei motorisch betriebenen Pkw-Seitenscheiben, die mit konstanter Geschwindigkeit ein- oder ausgefahren werden.

Aus der DE 41 19 704 A1 oder der EP 489 537 A1 sind Fensterdichtungen bekannt, bei welchen die Anpreßkraft der Dichtung an der Scheibe während der Scheibenbewegung reduziert wird, um den motorischen Kraftaufwand für die Scheibenbewegung zu reduzieren. Weiterhin sind samtartige Beläge auf den Dichtungen bekannt, die ebenfalls die Reibung vermindern, sich jedoch im Laufe der Zeit abnützen.

Aus der DE 33 01 935 A1 oder der DE 40 40 037 sind Dichtleisten aus weichelastischem Material bekannt, in denen Verstärkungskörper eingearbeitet sind, um die Biegesteifigkeit des Dichtstreifens zu erhöhen bzw. dauerhaft zu gestalten.

Aufgabe der Erfindung ist es, die beim Aus- oder Einfahren von Fensterscheiben, insbesondere Pkw-Seitenscheiben auftretenden Quietschgeräusche zu beseitigen, ohne deren Dichtwirkung im geschlossenen Zustand zu beeinträchtigen. Die Lösung dieser Aufgabe gelingt durch eine nach dem Patentanspruch 1 ausgebildeten Einrichtung.

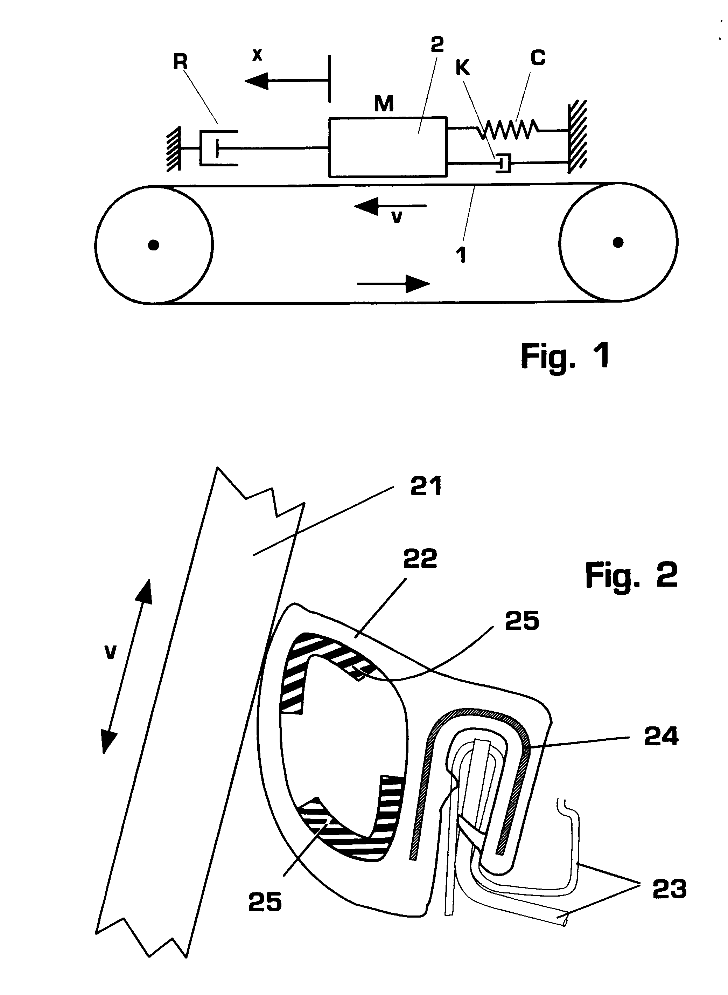

Am Beispiel des in Figur 1 dargestellten Ersatzschaltbildes für das Problem von selbsterregenden Reibschwingungen soll die Erfindung näher dargestellt werden. In diesem schematisch dargestellten Beispiel bewegt sich ein Band 1 mit einer Geschwindigkeit v unter einen Körper 2 mit einer Masse M. Im allgemeinen Fall stellt M die modale Masse für eine Reibschwingung

mit der Eigenfrequenz $\omega$ dar; in gleicher Weise wird mit C die modale Federkonstante und mit K die modale Dämpfung eines derartigen Reibschwingers definiert. Die Eigenfrequenz $\omega$ bestimmt sich dabei aus der Beziehung $\omega = \sqrt{C/M}$.

Zwischen dem Band 1 und dem Körper 2 tritt eine Reibungskraft $F(v-\dot{x})$ auf, die von der Relativgeschwindigkeit $v-\dot{x}$ abhängt, welche durch Überlagerung der Geschwindigkeit $v$ mit der Schwingungsgeschwindigkeit $\dot{x}$ zustande kommt und die sich in linearer Näherung (Taylorreihe) durch

$$F(v-\dot{x}) = F(v)-F_1 \cdot \dot{x}$$

beschreiben läßt (s.a. P.M. Morse, K.U. Ingard, "Theoretical Acoustic", McGraw-Hill, 1968, S. 841 ff). Darin bedeutet $\dot{x} = \delta x/\delta t$ die Schwinggeschwindigkeit des Körpers 2 und $F_1 = \delta F(v)/\delta v$ die erste Ableitung von F (v) in der Taylor-Reihenentwicklung. Für die Betrachtung von Schwingungen kann der konstante Anteil der Reibungskraft $F(v)$ außer Betracht bleiben. Für eine selbsterregte Reibschwingung ergibt sich dann folgende Bewegungsgleichung:

$$M \cdot \ddot{x}+(K-F_1) \cdot \dot{x}+C \cdot x = 0.$$

Eine Reibschwingung tritt auf, solange der Term $(K-F_1)$ negativ ist.

Erfindungsgemäß wird an das aus Band 1 und Körper 2 bestehende Schwingsystem eine zusätzliche Dämpfung, z.B. in Form eines an sich bekannten Schwingungsdämpfers oder -absorbers angebracht, welcher eine modale Zusatzdämpfung R aufweist. Ist diese Zusatzdämpfung R so bemessen, daß die Bedingung

$$K-F_1+R>0$$

erfüllt ist, so bleibt das gesamte System aus bewegtem Band 1 und reibendem Körper 2 stabil und es treten keine Reibschwingungen auf.

Im folgenden wird die Erfindung anhand der in der Figuren 2 bis 10 teilweise schematisch dargestellten Ausführungsbeispiele einer PKW-Seitenscheibendichtung näher beschrieben. Gezeigt wird dabei stets ein Querschnitt durch die sogenannte Schachtabdichtung an der Türinnenseite, wobei die Endziffern der Bezugszeichen für gleiche oder gleichartige Teile stets gleich sind.

In den in den Figuren 2 bis 10 dargestellten Ausführungsbeispielen liegt an einer vertikal mit einer Geschwindigkeit v verschiebbaren Seitenscheibe 21, 31, ...101 eine streifenförmige Dichtung 22, 32, ..102 an, welche aus einem Hohlprofil aus Gummi oder ähnlich elastischem Material hergestellt ist. Die Befestigung der Dichtung an einer Halterung 23, 33, ..103 geschieht über ein in die Dichtung integriertes U-förmiges Klemmteil, in welches eine entsprechend geformte innere Versteifung 24, 34, ..104 integriert ist.

Bei dem in Figur 2 dargestellten Ausführungsbeispiel befindet sich im Innenraum der rohrförmigen Dichtung 22 an den Stellen maximaler Verformung bei durch Reibung an der bewegten Scheibe 21 verursachter Bewegung ein Dämpfungsbelag 25, der beispielsweise aus einem hochdämpfenden Elastomer, Elastomerschaum oder einem sogenannten "eingezwängten Belag" besteht.

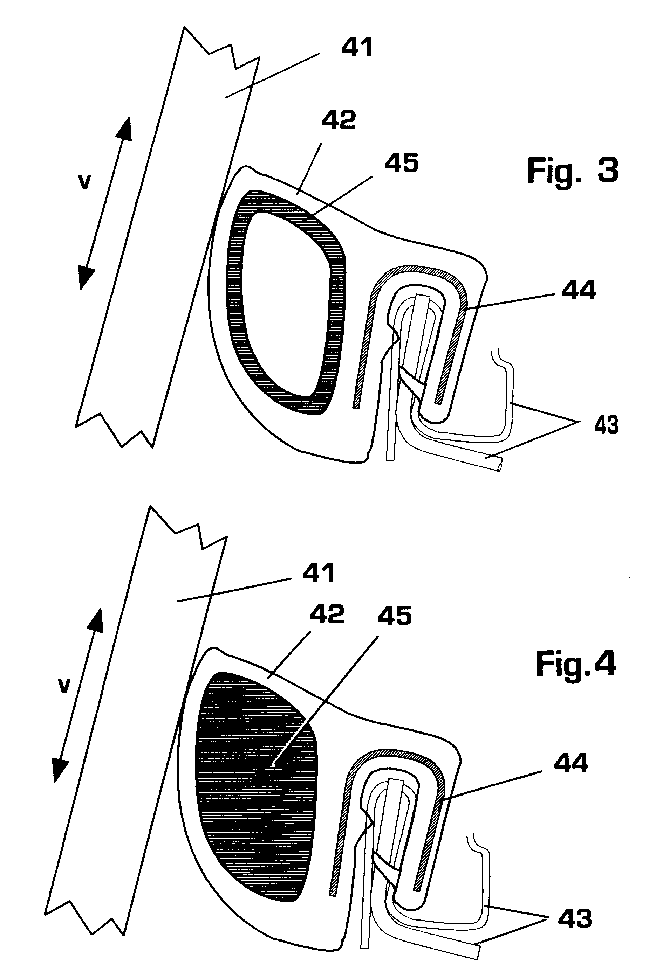

Bei dem in Figur 3 dargestellten Ausführungsbeispiel ist die komplette Innenwand der Dichtung mit einem sogenannten "Antidröhnbelag" bzw. einem "eingezwängten Belag" belegt.

Bei dem in Figur 4 dargestellten Ausführungsbeispiel ist der komplette Innenraum der Dichtung 42 mit einem dämpfenden Elastomerschaum ausgefüllt.

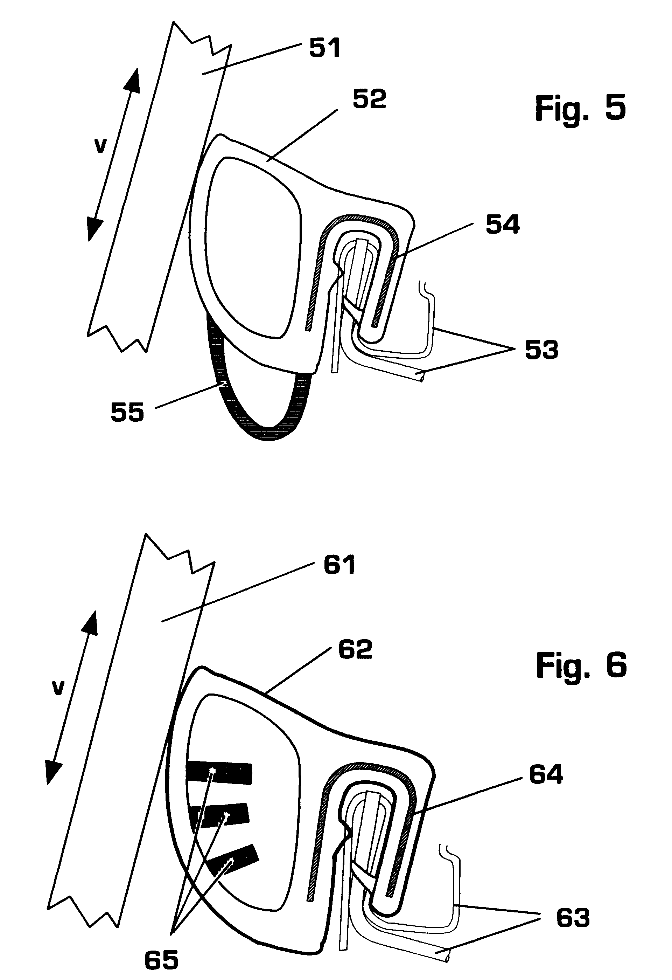

Bei dem in Figur 5 dargestellten Ausführungsbeispiel ist am unteren Außenwandbereich der Dichtung 52 ein Schwingungsabsorber 55 angebracht, der in bekannter Weise als Wellenleiter die in der Dichtung 52 angeregten Schwingungen ableitet und in sich absorbiert.

Bei dem in Figur 6 dargestellten Ausführungsbeispiel befinden sich im Innenraum der Dichtung 62 einseitig an dessen Innenwand kraftschlüssig, z.B. durch Kleben angebrachte, auf unterschiedliche Frequenzen abgestimmte Resonanzabsorber 65 Die Frequenzen der Resonanzabsorber 65 sind auf die Eigenfrequenz und deren Harmonische der Reibschwingung abgestimmt.

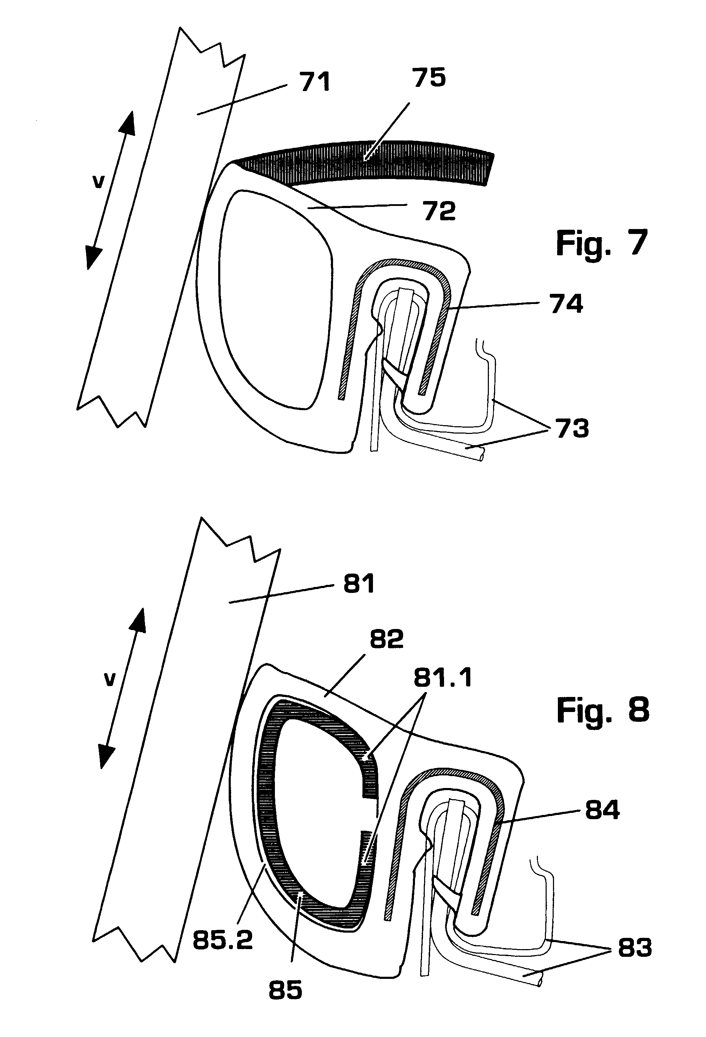

Bei dem in Figur 7 dargestellten Ausführungsbeispiel ist an der Oberseite der Dichtung 72 ein streifenförmiger Schwingungsabsorber 75 angebracht, der aufgrund seiner größeren wirksamen Länge für die Dämpfung tieferer Schwingungen geeigneter ist als derjenige gemäß Figur 5.

Bei dem in Figur 8 dargestellten Ausführungsbeispiel ist in dem Innenraum der Dichtung 82 ein Belag 85 eingeschoben, der parallel zur Innenwand der Dichtung 82 verläuft, dieser jedoch nur in den Bereichen 81.1 fest verbunden ist, im Bereich 85.2 hingegen an der Innenwand reiben kann. Schwingungen der Dichtung 82 werden so durch Festkörperreibung bedämpft.

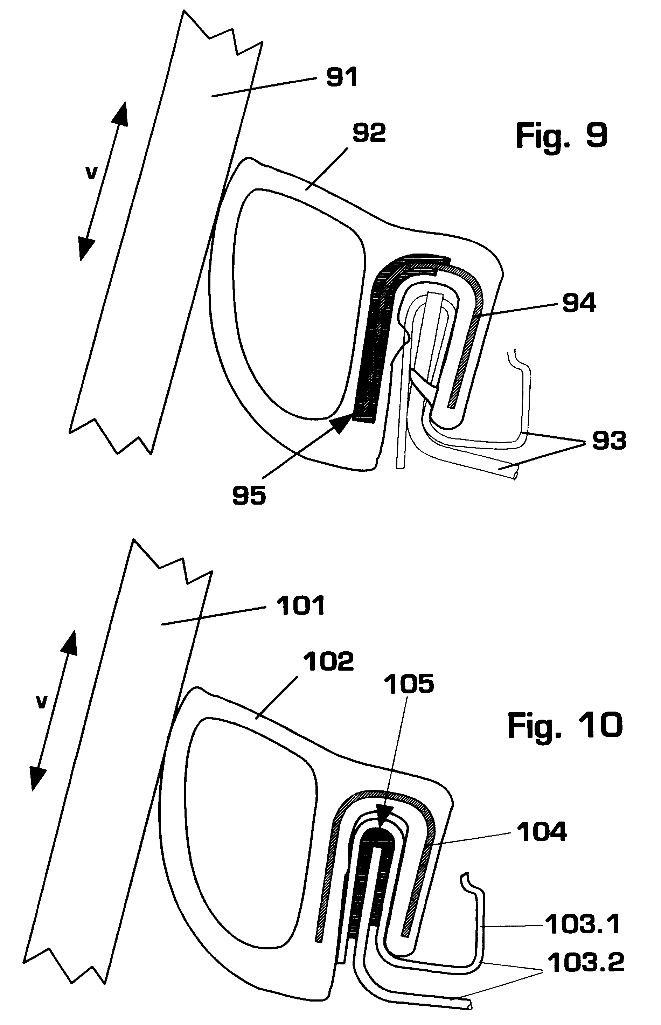

In Fig. 9 werden Biege- und Drehschwingungen der inneren Versteifung 94 durch ein sogenanntes Sandwich- oder Verbundsystem gedämpft. Es handelt sich dabei um eine viskoelastische Schicht 95, die auf die innere Versteifung 94 aufgebracht wird, und die ihrerseits mit einer steifen Abdeckung verbunden ist.

Die Schachtabdichtung 102 gemäß Fig. 10 ist auf der Türinnenseite durch Clips 103.1 mit dem Türrahmen 103.2 verbunden. Gemäß Fig. 10 werden Schwingungen der Halteclips 103.1 durch hochdämpfende Elastomere 105 zwischen Clips 103.1 und Türrahmen 103.2 gedämpft.

## Patentansprüche

1. Einrichtung zur Vermeidung von Quietschgeräuschen durch eine Dichtung an einer Fensterscheibe, insbesondere einer Pkw-Seitenscheibe, welche quer zu der an der Scheibe anliegenden Dichtung verschiebbar ist,
**dadurch gekennzeichnet,**
daß die Dichtung (22, 42, 52, 62, 72, 82, 92, 102) als Hohlprofilleiste ausgebildet ist, welche mit einem Schwingungsdämpfer oder -absorber (25, 45, 55, 65, 75, 85, 95, 105) verbunden ist.

2. Einrichtung nach Anspruch 1,
**dadurch gekennzeichnet,**
daß die Dichtung (22) im Bereich der durch eine selbsterregte Reibschwingung verursachten maximalen Verformung mit einem Dämpfungsbelag (25) versehen ist.

3. Einrichtung nach Anspruch 1 oder 2,
**dadurch gekennzeichnet,**
daß die Dichtung (52, 62, 72) im Bereich der durch eine selbsterregte Reibschwingung verursachten maximalen Bewegung mit einem Schwingungsabsorber (25) versehen ist.

4. Einrichtung nach einem der Ansprüche 1 bis 3,
**dadurch gekennzeichnet,**
daß die Befestigung der Dichtung (92, 102) an einem Rahmenteil (93, 103.2) über ein schwingungsdämpfendes Elastomer (95, 105) erfolgt.

## Claims

1. A device for avoiding squeaking noises caused by a seal on a window pane, particularly the side window of a motor car and which is displaceable transversely in relation to the seal which bears on the window pane, characterised in that the seal (22, 42, 52, 62, 72, 82, 92, 102) is constructed as a hollow profile strip which is connected to a vibration damper or absorber (25, 45, 55, 65, 75, 85, 95, 105).

2. A device according to claim 1, characterised in that in the region of maximum deformation caused by a self-excited friction vibration, the seal (22) is provided with a damping lining (25).

3. A device according to claim 1 or 2, characterised in that in the region of maximum movement caused by a self-excited friction vibration, the seal (52, 62, 72) is provided with a vibration absorber (25).

4. A device according to one of claims 1 to 3, characterised in that the fixing of the seal (92, 102) on a frame part (93, 103.2) is carried out by means of vibration-damping elastomer (95, 105).

**Revendications**

1. Dispositif pour empêcher des bruits de grincement provoqués par une garniture d'étanchéité contre une vitre de fenêtre, en particulier une vitre latérale de véhicule de tourisme, qui peut coulisser transversalement par rapport à la garniture d'étanchéité qui s'applique contre la vitre
caractérisé
par le fait que la garniture d'étanchéité (22, 42, 52, 62, 72, 82, 92, 102) est conçue en tant que baguette profilée creuse reliée à un amortisseur ou un absorbeur d'oscillations (25, 45, 55, 65, 75, 85, 95, 105).

2. Dispositif selon la revendication 1,
caractérisé
par le fait que la garniture d'étanchéité (22) comporte une garniture d'amortissement (25) dans la zone de la déformation maximale provoquée par une oscillation auto-excitée résultant du frottement.

3. Dispositif selon la revendication 1 ou 2,
caractérisé
par le fait que la garniture d'étanchéité (52, 62, 72) comporte un absorbeur d'oscillation (25) dans la zone du mouvement maximal provoqué par une oscillation auto-excitée résultant du frottement.

4. Dispositif selon l'une des revendications 1 à 3,
caractérisé
par le fait que la fixation de la garniture d'étanchéité (92, 102) sur une partie du cadre (93, 103.2) se fait au moyen d'un élastomère amortisseur des oscillations (95, 105).

**Fig. 1**

**Fig. 2**

41

42

45

v

**Fig. 3**

44

43

41

42    45

v

**Fig.4**

44

43

Fig. 5

Fig. 6

**Fig. 7**

**Fig. 8**

Fig. 9

v

91

92

94

93

95

Fig. 10

101

102

105

104

103.1

103.2

v